(19) Europäisches Patentamt
European Patent Office
Office européen des brevets

(11) EP 4 094 902 B1

(12) **EUROPEAN PATENT SPECIFICATION**

(45) Date of publication and mention of the grant of the patent:
**09.07.2025 Bulletin 2025/28**

(21) Application number: **22174362.8**

(22) Date of filing: **19.05.2022**

(51) International Patent Classification (IPC):
***B25J 9/16*** *(2006.01)* ***G05B 19/4097*** *(2006.01)*

(52) Cooperative Patent Classification (CPC):
**G05B 19/4097; B25J 9/1671;** G05B 2219/35121

(54) **PATH TEACHING DATA CREATION DEVICE, PATH TEACHING DATA CREATION METHOD, AND PROGRAM**

VORRICHTUNG, VERFAHREN UND PROGRAMM ZUR ERSTELLUNG VON PFADLEHRDATEN

DISPOSITIF DE CRÉATION DE DONNÉES D'APPRENTISSAGE DE TRAJET, PROCÉDÉ DE CRÉATION DE DONNÉES D'APPRENTISSAGE DE TRAJET ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2021 JP 2021089234**

(43) Date of publication of application:
**30.11.2022 Bulletin 2022/48**

(73) Proprietor: **JANOME Corporation**
**Hachioji-shi**
**Tokyo 193-0941 (JP)**

(72) Inventor: **YAMAMOTO, Yosuke**
**Tokyo, 193-0941 (JP)**

(74) Representative: **Lippert Stachow Patentanwälte Rechtsanwälte**
**Partnerschaft mbB**
**Postfach 30 02 08**
**51412 Bergisch Gladbach (DE)**

(56) References cited:
**JP-A- H07 302 110**
**JP-A- H09 244 723**
**US-A1- 2018 036 883**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 094 902 B1

## Description

[Technical Field]

The present invention relates to a path teaching data creation device, a path teaching data creation method, and a program.

[Background Art]

Industrial robots, for example, are controlled by being provided with a path followed by a tool of a robot as teaching data. For example, Patent Literature 1 discloses that teaching data provided to a robot is created by using two-dimensional computer-aided design (CAD) data. JP H09 244723 A relates to a instruction data creation method of an industrial robot, an instruction data creation method of an industrial robot, and an industrial robot system, which creates the instruction data and the program of work which an industrial robot performs to a work, based on the design data of the above-mentioned work, the data of the curved surface of the above-mentioned work is created, specifying two or more curved surfaces from the inside of the data of the curved surface, and the candidate path which consists of a curve which divided each of that specified curved surface is created. US 2018/036883 A1 describes a simulation apparatus that performs an operation of a virtual robot as a virtualization of a robot, includes a processor that is configured to specify a plurality of line segments of an outer shape of a virtual object as a virtualization of a work object of the robot, wherein data of the virtual object is converted from a first format into a second format having a data volume compressed to one tenth or less of that of the first format, and the processor is configured to operate the virtual robot based on selected line segments of the plurality of line segments. JP H07 302110 A describes a production of robot operation program.

[Citation List]

[Patent Literature]

[PTL 1]
Japanese Patent Application Laid-Open No. 2005-332347

[Summary of Invention]

[Technical Problem]

Path teaching data for performing drive control on a robot is required to indicate a single path without a branch. In three-dimensional CAD data used for designing, however, a plurality of spline curves are multiply connected (see Fig. 4 as an example). Thus, conventionally, the user needs to designate one by one a path followed by a tool of the robot in a three-dimensional shape drawn by three-dimensional CAD as illustrated in Fig. 4, and this involves a high burden on the user.

The present invention has been made in view of such circumstances and intends to provide a path teaching data creation device, a path teaching data creation method, and a program that can reduce the burden on the user.

[Solution to Problem]

The first aspect of the present invention is a path teaching data creation device for creating path teaching data required for drive control of a robot by using design data including information on a plurality of curves according to claim 1.

The second aspect of the present invention is a path teaching data creation method for creating path teaching data required for drive control of a robot by using design data including information on a plurality of curves according to claim 5.

The third aspect of the present invention is a program according to claim 6 configured to cause a computer to function as the above path teaching data creation device.

[Advantageous Effects of Invention]

The present invention achieves an advantageous effect that it is possible to reduce the burden on the user.

[Brief Description of Drawings]

[Fig. 1]
Fig. 1 is a schematic system diagram schematically illustrating the overall configuration of a robot system according to one embodiment of the present invention.
[Fig. 2]
Fig. 2 is a schematic configuration diagram illustrating an example of a hardware configuration of a path teaching data creation device according to one embodiment of the present invention.
[Fig. 3]
Fig. 3 is a function block diagram illustrating an example of functions of the path teaching data creation device according to one embodiment of the present invention.
[Fig. 4]
Fig. 4 is a diagram illustrating an example of a three-dimensional model.
[Fig. 5]
Fig. 5 is a diagram illustrating a selection step performed in a selection unit according to one embodiment of the present invention.
[Fig. 6]
Fig. 6 is a diagram illustrating the selection step performed in the selection unit according to one embodiment of the present invention.
[Fig. 7]
Fig. 7 is a diagram illustrating the selection step performed in the selection unit according to one embodiment of the present invention.
[Fig. 8]
Fig. 8 is a diagram illustrating the selection step performed in the selection unit according to one embodiment of the present invention.
[Fig. 9]
Fig. 9 is a flowchart illustrating an example of a procedure of a path teaching data creation method according to one embodiment of the present invention.
[Fig. 10]
Fig. 10 is a flowchart illustrating an example of a procedure of the path teaching data creation method according to one embodiment of the present invention.
[Fig. 11]
Fig. 11 is a flowchart illustrating an example of a procedure of the path teaching data creation method according to one embodiment of the present invention.

[Description of Embodiments]

A path teaching data creation device, a path teaching data creation method, and a program according to one embodiment of the present invention will be described below with reference to the drawings.
Fig. 1 is a schematic system diagram schematically illustrating the overall configuration of a robot system 100 according to one embodiment of the present invention. As illustrated in Fig. 1, the robot system 100 includes a path teaching data creation device 1, a robot control device 2, and a robot 3, for example.
The path teaching data creation device 1 is a device for creating path teaching data required for drive control of the robot 3 by using design data including information on a plurality of curves.
The robot control device 2 is a control device that performs drive control on the robot 3. The robot control device 2 performs drive control on the robot 3 based on path teaching data created by the path teaching data creation device 1, for example.
For example, the path teaching data creation device 1 and the robot control device 2 are connected via a network and configured to be able to transmit and receive data. The path teaching data created by the path teaching data creation device 1 is transmitted to the robot control device 2 via the network, for example, and used in the robot control device 2.
The robot 3 is, for example, an industrial robot and, for example, based on drive control performed by the robot control device 2, a tool attached to the tip of an arm (hereafter, referred to as "robot tool") follows a path based on path teaching data to perform various types of set processing, such as application of an adhesive agent, removal of a burr, fastening of a screw, or the like.
Fig. 2 is a schematic configuration diagram illustrating an example of a hardware configuration of the path teaching data creation device 1 according to one embodiment of the present invention. As illustrated in Fig. 2, the path teaching data creation device 1 is a so-called computer and includes a central processing unit (CPU) 11, a main memory 12, a storage unit 13, an external interface 14, a communication interface 15, an input unit 16, a display unit 17, and the like, for example. These units are connected to each other directly or indirectly via a bus and perform various processes in cooperation with each other. Further, the input unit 16 and the display unit 17 may be connected via a network, for example.

The CPU 11 performs overall control of the path teaching data creation device 1 by using operating system (OS) stored in the storage unit 13 connected thereto via a bus, for example, and performs various processes by executing various programs stored in the storage unit 13.

The main memory 12 is formed of a writable memory such as a cash memory, a random access memory (RAM), or the like, for example, and used as a working area where an execution program of the CPU 11 is loaded, data processed by the execution program is written, or the like.

The storage unit 13 is a non-transitory storage medium (non-transitory computer readable storage medium) and may be, for example, a read only memory (ROM), a hard disk drive (HDD), a flash memory, or the like. For example, the storage unit 13 stores OS used for performing overall control of the path teaching data creation device 1, such as Windows (registered trademark), iOS (registered trademark), Android (registered trademark), or the like, basic input/output system (BIOS), various device driver used for operating hardware of peripherals, various application software, various data or files, and the like. Further, the storage unit 13 stores a program used for implementing various processes or various data required for implementing various processes.

The external interface 14 is an interface used for a connection to an external device. An example of the external device may be an external monitor, a USB memory, an external HDD, or the like. Note that, although only a single external interface is depicted in the example illustrated in Fig. 1, a plurality of external interfaces may be provided.

The communication interface 15 functions as an interface that connects itself to a network to communicate with another device and transmits and receives information.

For example, the communication interface 15 communicates with another device via a wired or wireless connection, for example. The wireless communication may be communication using Bluetooth (registered trademark), Wi-Fi, a dedicated communication protocol, or the like. An example of wired communication may be a wired local area network (LAN) or the like.

The input unit 16 is a user interface used by the user to provide an instruction to the path teaching data creation device 1, such as a keyboard, a mouse, a touch pad, or the like, for example.

The display unit 17 is a liquid crystal display, an organic electroluminescence (EL) display, or the like, for example. Further, the display unit 17 may be a touch panel display on which a touch panel is layered.

Fig. 3 is a function block diagram illustrating an example of functions of the path teaching data creation device 1. As illustrated in Fig. 3, the path teaching data creation device 1 includes a CAD data storage unit 21, a CAD data acquisition unit 22, a display control unit 23, a selection unit 24, a path creation unit 25, a path teaching data storage unit 26, and a path change unit 27, for example.

All or some of these functions are implemented by processing circuitry, for example. For example, a series of processes for implementing the function described below is stored in the storage unit 13 in a form of a program (for example, a path teaching data creation program) as an example, and various functions are implemented when the CPU 11 loads the program into the main memory 12 and performs modification or operational processing on information.

A form in which a program is installed in advance in the storage unit 13, a form in which a program is provided in a state of being stored in another computer readable storage medium, a form in which a program is delivered via a wired or wireless communication scheme, or the like may be applied to the program. The computer readable storage medium may be a magnetic disk, a magneto-optical disk, a CD-ROM, a DVD-ROM, a semiconductor memory, or the like.

The CAD data storage unit 21 stores a plurality of three-dimensional CAD data, for example. The three-dimensional CAD data is design data related to a product to be processed by the robot 3. The design data may be data for designing a final processing product or may be data for designing an intermediate product.

The three-dimensional CAD data includes information on a plurality of curves (spline curves), for example. The term "curve" as used herein is of a concept including "straight line" and may be a spline curve as an example. Each information on a curve includes information on the coordinates of a first end of the curve, information on the coordinates of a second end of the curve, and information for connecting the first end and the second end to each other.

An example of the information for connecting the first end and the second end to each other may be tangent information, vector information, or the like. Further, each curve may have information on an orientation. In such a case, one of the first end and the second end has information as a start point, and the other has information as an end point.

The CAD data acquisition unit 22 acquires designated three-dimensional CAD data from the CAD data storage unit 21 when input information designating any of the plurality of three-dimensional CAD data stored in the CAD data storage unit 21 is input from the input unit 16.

The display control unit 23 causes the display unit 17 to display a three-dimensional model represented by three-dimensional CAD data acquired by the CAD data acquisition unit 22.

Further, the display control unit 23 causes the display unit 17 to display a path based on path teaching data created by the path creation unit 25 described later. Accordingly, a path on which the robot tool follows can be visually presented to the user.

When the input unit 16 is operated by the user and thereby input information designating a curve and the start point thereof is input, for example, the selection unit 24 sets the designated curve as a connection source curve, which is a curve from which a connection is started, and selects a further curve connected to the end point of the connection source curve as a connection target curve.

For example, it is assumed that, when a three-dimensional model as illustrated in Fig. 4 is displayed on the display unit 17, the input unit 16 is operated by the user, and the point A and the curve L are designated. In such a case, as illustrated in Fig. 5, the selection unit 24 sets the point A as the start point P1 and sets the curve L1 including the start point P1 as a connection source curve.

Next, the selection unit 24 identifies a further curve connected to the end point of the connection source curve from the three-dimensional CAD data. Accordingly, for example, as illustrated in Fig. 6, the curve L2 is identified as a further curve connected to the end point P2 of the connection source curve L1. Then, when a single further curve is identified, the single further curve is selected as the connection target curve, and a curve to be a connection target curve is selected by using the selected further curve as the next connection source curve.

For example, in the example illustrated in Fig. 6, the number of further curves connected to the end point P2 is one, and the curve L2 is thus selected as a connection target curve, and the curve L2 is set as the next connection source curve. A further curve connected to the end point P3 of the connection source curve L2 is then identified. Such a process is then repeated, and thereby, for example, as illustrated in Fig. 6, the curves L2 to L6 are sequentially selected as connection target curves and sequentially set as connection source curves.

Further, when there are a plurality of further curves connected to the connection source curve, the selection unit 24 selects any one of the further curves as a connection target curve based on the final tangent direction (for example, the termination vector) of the connection source curve and each start tangent direction (for example, each start vector) of each of the plurality of further curves.

More specifically, the selection unit 24 calculates a connection angle $\theta$ that is an angle formed between a final tangent direction of a connection source curve and each start tangent direction of a plurality of further curves and selects a further curve with the smallest calculated connection angle $\theta$ as a connection target curve.

For example, in the three-dimensional model illustrated as an example in Fig. 6, the curve L7 and the curve L8 are present as further curves to be connected to the end point P7 of the curve L6 that is a connection source curve. In such a case, the selection unit 24 calculates the connection angle between the curve L6, which is a connection source curve, and the curve L7 and the connection angle between the curve L6 and the curve L8, respectively, for example. Herein, Fig. 7 is an enlarged view around the curve L6.

The connection angle $\theta$ is expressed by the following equation, for example.

$$\cos\theta = \frac{\overrightarrow{a}\cdot\overrightarrow{b}}{|\vec{a}||\vec{b}|} = \frac{a_1b_1 + a_2b_2 + a_3b_3}{\sqrt{a_1^2 + a_2^2 + a_3^2}\sqrt{b_1^2 + b_2^2 + b_3^2}} \quad (1)$$

where vector a is a termination vector of the connection source curve, and vector b is a start vector of the connection target curve.

The selection unit 24 selects a curve having the smallest connection angle as a connection target curve out of the calculated connection angles. For example, as a connection target curve, the selection unit 24 selects a curve whose value of $\cos\theta$ expressed by the above (1) is the closest to 1.

Accordingly, in the three-dimensional model illustrated as an example in Fig. 7, the curve L7 is selected as a connection target curve of the curve L6. Note that, since each of the curve L6, the curve L7, and the curve L8 is represented in substantially a straight line in the three-dimensional model illustrated in Fig. 7, the start vectors and the termination vectors are represented as being not distinguished. When each of these curves is a spline curve, however, the start tangent direction and the final tangent direction of the curves may be different from each other, and the distinction thereof is thus necessary in such a case.

Further, when connection angles of a connection source curve relative to a plurality of curves are the same, the selection unit 24 identifies a plane from the start point of a curve connected to the start point of the connection source curve and the start point and the end point of the connection source curve. Then, based on this plane and each start tangent direction of the plurality of further curves, one of the further curves is selected as a connection target curve.

For example, when the three-dimensional model is a rectangular parallelepiped as illustrated in Fig. 8, further curves connected to the curve $L_n$ that is a connection source curve (a straight line may be included in curves) are the curve $L_{n+1}$ and the curve $L_{n+2}$, and since these curves orthogonally intersects the connection source curve, respectively, the connection angles are the same. In such a case, the selection unit 24 identifies a plane (the hatched part in Fig. 8) from the start point $P_{n-1}$ of the curve $L_{n-1}$ connected to the start point $P_n$ of the connection source curve $L_n$ and the start point $P_n$ and the end point $P_{n+1}$ of the connection source curve $L_n$. The complementary angles between a normal vector of the identified plane and respective start tangent directions of the curve $L_{n+1}$ and the curve $L_{n+2}$ are then calculated, and a curve having the smaller complementary angle is selected as a connection target curve.

Herein, when the angle formed between the normal vector of a plane and the start tangent vector of a curve is defined as D, the complementary angle E is expressed in the following equation (2).

$$E = \frac{\pi}{2} - D \tag{2}$$

As a result, in the three-dimensional model illustrated in Fig. 8, the curve $L_{n+1}$ is selected as a connection target curve.

Note that, when consideration is made on a start point or the like, if there is no curve connected to the start point of a connection source curve, a normal vector of any one of the planes in a rectangular coordinate system where a three-dimensional model is defined (for example, an XY plane) may be utilized.

The path creation unit 25 creates path teaching data based on a plurality of curves selected by the selection unit 24. Specifically, the path creation unit 25 creates path teaching data by adding, to information on each curve, link information used for connecting curves in series that are sequentially selected by the selection unit 24.

The path teaching data created by the path creation unit 25 is stored in the path teaching data storage unit 26.

The path change unit 27 changes path teaching data based on the input correction instruction and updates the path teaching data in the path teaching data storage unit 26 when a correction instruction is input by the user for a robot tool path displayed on the display unit 17 by the display control unit 23, for example.

Next, the path teaching data creation method according to the present embodiment will be described with reference to Fig. 9 to Fig. 11. Fig. 9 to Fig. 11 are flowcharts illustrating an example of a process procedure of the path teaching data creation method according to the present embodiment. The process described below is implemented when the CPU 1 1 loads a program (path teaching data creation program) stored in the storage unit 13 into the main memory 12 and executes the program, for example.

First, when some three-dimensional CAD data is designated by the user, the designated three-dimensional CAD data is acquired from the CAD data storage unit 21 (SA1), and a three-dimensional model represented by the acquired three-dimensional CAD data is displayed on the display unit 17 (SA2). Next, once one curve and one start point are designated by the user, the designated curve is set as a connection source curve (SA3), and one or more further curves connected to the end point of the connection source curve are identified (SA4). Next, it is determined whether or not the number of identified further curves is plural (SA5). As a result, if the number of identified further curves is one (SA5: NO), the identified further curve is selected as a connection target curve (SA6), and the process proceeds to step SA14.

In contrast, if a plurality of further curves are present (SA5: YES), connection angles that are angles formed between the final tangent direction (for example, the termination vector) of the connection source curve and the start tangent directions (for example, the start vectors) of respective further curves are calculated, respectively (SA7 of Fig. 10). Next, a further curve having the smallest angle out of the calculated connection angles is identified (SA8), and it is determined whether or not the identified further curve is uniquely identified (SA9). As a result, if the identified further curve is uniquely identified (SA9: YES), the identified further curve is selected as the connection target curve (SA10), and the process proceeds to step SA14 of Fig. 9.

In contrast, in step SA9, if the identified further curve is not uniquely identified (SA9: NO), when a plurality of further curves having the same connection angle are present, a plane is identified from the start point connected to the start point of the connection source curve and the start point and the end point of the connection source curve, for example, as illustrated in Fig. 8 (SA11). The complementary angles to the angles formed between the normal vector of the identified plane and respective start tangent directions of the plurality of further curves are then calculated (SA12). Next, a further curve having the smallest complementary angle is selected as a connection target curve (SA13), and the process proceeds to step SA14 of Fig. 9.

In step SA14 of Fig. 9, it is determined whether or not the end point of the selected connection target curve satisfies the process end condition (SA14). An example of the process end condition may be, for example, a condition as to whether or not the end point of the selected connection target curve is a start point of an initial connection source curve, a condition as to whether or not the end point of the selected connection target curve is an end point designated by the user, or the like.

As a result, if the process end condition is not satisfied (SA14: NO), the selected connection target curve is set as a connection source curve (SA15), and the process returns to step SA4 and repeats the process described above. Accordingly, a plurality of curves forming a continuous line are sequentially selected.

In contrast, in step SA14, if the end point of the connection target curve satisfies the process end condition (SA14: YES), path teaching data is created based on information on the plurality of selected curves (SA16 of Fig. 11). Next, the created path teaching data is stored in the path teaching data storage unit (SA17), and a drive path of a robot tool based on the path teaching data is displayed on the display unit 17 (SA18).

Next, it is determined whether or not a correction instruction for the drive path of the robot tool is input by the user (SA19). For example, the user may check whether or not there is no error in a motion path of the robot tool displayed on the display unit 17 and, if there is an error, operate the input unit 16 to manually perform correction. If correction of the drive path is performed by the user in such a way (SA19: YES), the path teaching data of the path teaching data storage unit 26 is changed based on the correction instruction (SA20), and the process proceeds to step SA21.

In contrast, in step SA19, if no correction instruction is input by the user (SA19: NO), the process proceeds to step SA21.

In step SA21, it is determined whether or not an end instruction is input by the user. As a result, if no end instruction is input (SA21: NO), the process returns to step SA19 and repeats the subsequent process. In contrast, in step SA21, if an end instruction is input by the user (SA21: YES), the process ends.

Once the process described above is performed, the path teaching data created based on the three-dimensional CAD data is stored in the path teaching data storage unit 26. Then, for example, predetermined path teaching data is read from the path teaching data storage unit 26 in accordance with a request instruction from the robot control device 2 (see Fig. 1) and used for drive control of the robot 3 in the robot control device 2.

As described above, according to the path teaching data creation device 1, the path teaching data creation method, and the program of the present embodiment, the following effects and advantages are achieved.

According to the present embodiment, a further curve connected to an end point of a connection source curve that is a curve from which a connection is started is selected as a connection target curve, the selected further curve is set as a next connection source curve, and a further curve connected to the connection source curve is further selected. This process is repeated, thereby a plurality of curves forming a continuous line are selected, and path teaching data is created based on the plurality of selected curves. This makes it possible to automatically create path teaching data from a three-dimensional CAD data. As a result, the burden on the user due to creation of path teaching data can be reduced.

Further, when a plurality of further curves connected to the end point of the connection source curves are present, in other words, when a plurality of candidate are present for a curve connected to the connection source curve, one of the further curves is selected as a connection target curve based on the final tangent direction (for example, the termination vector) of the connection source curve and each start tangent direction (for example, each start vector) of the plurality of further curves.

More specifically, connection angles that are angles formed between the final tangent direction of the connection source curve and respective start tangent directions of the plurality of further curves are calculated, and a further curve having the smallest connection angle is selected as the connection target curve.

As described above, since a connection target curve is selected taking into consideration of a connection angle of a further curve relative to a connection source curve, a suitable curve can be selected as the connection target curve.

Furthermore, when connection angles for a plurality of further curves that are candidates for a connection target are the same, a plane is identified from the start point of curve connected to the start point of the connection source curve and the start point and the end point of the connection source curve. Then, based on this plane and each start tangent direction of the plurality of further curves, one of the further curves is selected as the connection target curve. Accordingly, even when a plurality of further curves connected at the same angle to the connection source curve are present as candidates for a connection target curve, a suitable curve can be selected as the connection target curve, as illustrated in Fig. 8, for example.

Further, the input unit 16 for the user to designate an initial connection source curve and a start point thereof is provided. This enables the user to designate a desired start point and designate a direction in which a path runs from the start point.

Further, since a drive path of the robot 3 based on the created path teaching data is displayed on the display unit 17, this enables the user to easily confirm the drive path of the robot 3 based on the automatically created path teaching data.

Furthermore, when the user performs a correction operation on the drive path of the robot, the path teaching data is changed based on a correction instruction for the correction operation. This enables the user to easily perform the correction operation when the drive path of the robot based on the path teaching data is not suitable.

Although the present invention has been described above with reference to the embodiment, the technical scope of the present invention is not limited to the scope described in the above embodiment. Various modification or improvement can be added to the above embodiment within the scope not departing from the spirit of the invention, and a form to which the modification or improvement is added is also included in the technical scope of the present invention. Further, the above embodiments may be combined as appropriate.

Further, a flow of the path teaching data creation method described in the above embodiment is a mere example, an unnecessary step may be deleted, a new step may be added, or the process order may be exchanged within the scope not departing from the spirit of the present invention.

For example, although the case where an initial curve and a start point thereof are designated by the user has been described in the above embodiment, the setting of such a curve and a start point is not limited to the above example. For example, when an initial condition is determined in advance, an initial connection source curve and a start point thereof may be automatically set based on the initial condition, or another scheme may be used.

Further, in the above embodiment, a threshold for a connection angle may be provided in a determination condition when the selection unit 24 selects a connection target curve. For example, when a connection target curve is connected to a connection source curve at an acute angle, this connection is highly likely to be a connection not intended by the user. To avoid such an unsuitable connection, the selection unit 24 may perform the following determination, for example.

For example, when a further curve connected to the end point of a connection source curve is identified, the selection unit 24 calculates the connection angle of the identified further curve and determines whether or not the calculated connection angle is greater than or equal to a threshold. Then, if the connection angle is less than the threshold, the selection unit 24 selects the identified further curve as a connection target curve. Further, if the connection angle is greater than or equal to the threshold, the selection unit 24 determines whether or not another further curve connected to the connection source curve is present, and if present, may exclude this further curve from candidates. Further, for example, a connection relationship between a connection source curve and a connection target curve may be displayed on the display unit 17 to let the user make a choice. Such a determination process can be provided between step SA4 and step SA5 or between step SA5 and step SA6 in Fig. 9, for example.

The above threshold for a connection angle can be set to any value greater than 90 degrees, for example.

Further, although the case where a plurality of three-dimensional CAD data is stored in the CAD data storage unit 21 has been described as an example in the above embodiment, the storage location of the three-dimensional CAD data is not particularly limited. For example, three-dimensional CAD data may be stored in a particular server connected to a network and then downloaded from this server via the network, and thereby the CAD data acquisition unit 22 may acquire the three-dimensional CAD data. Further, three-dimensional CAD data may be stored in a computer readable storage medium (for example, a magnetic disk, a magneto-optical disk, a CD-ROM, a DVD-ROM, a semiconductor memory, or the like) that is removable from the path teaching data creation device 1, and the CAD data acquisition unit 22 may be configured to acquire the three-dimensional CAD data with such a storage medium being connected to the path teaching data creation device 1.

Similarly, although the case where path teaching data is stored in the path teaching data storage unit 26 has been described as an example in the above embodiment, the storage location of path teaching data is not limited to this example. That is, in the same manner as for the three-dimensional CAD data described above, the path teaching data may be stored in a particular server, or may be stored in a computer readable storage medium that is removable from the path teaching data creation device 1.

Furthermore, although a form in which the path teaching data creation device 1 and the robot control device 2 are connected via a network and the path teaching data is transmitted and received via the network is employed in the above embodiment, transfer of the path teaching data is not limited to this example. For example, the path teaching data may be provided from the path teaching data creation device 1 to the robot control device 2 via a computer readable storage medium.

Further, the robot control device 2 may include the path teaching data creation device 1, and path teaching data may be created in the robot control device 2. That is, a configuration in which various functions of the path teaching data creation device 1 are mounted in the robot control device 2 may be employed.

[Reference Signs List]

| | |
|---|---|
| 1 | path teaching data creation device |
| 2 | robot control device |
| 3 | robot |
| 11 | CPU |
| 12 | main memory |
| 13 | storage unit |
| 14 | external interface |
| 15 | communication interface |
| 16 | input unit |
| 17 | display unit |
| 21 | CAD data storage unit |
| 22 | CAD data acquisition unit |
| 23 | display control unit |
| 24 | selection unit |
| 25 | path creation unit |

26 path teaching data storage unit
27 path change unit
100 robot system

## Claims

1. A path teaching data creation device (1) for creating path teaching data required for drive control of a robot (3) by using design data including information on a plurality of curves, the path teaching data creation device (1) comprising:

   a selection unit (24) configured to select, as a connection target curve, at least one further curve connected to an end point of a connection source curve that is a curve from which a connection is started, determine the selected further curve as a next connection source curve, and sequentially select a curve to be the connection target curve; and
   a path creation unit (25) configured to create the path teaching data based on the plurality of curves selected by the selection unit (24),
   wherein when a plurality of further curves connected to the end point of the connection source curve are present, the selection unit (24) is configured to select one of the further curves as the connection target curve based on a final tangent direction of the connection source curve and respective start tangent directions of the plurality of further curves, and

   when the plurality of further curves connected to the end point of the connection source curve are present, the selection unit (24) calculates connection angles that are angles formed between the final tangent direction of the connection source curve and respective start tangent directions of the plurality of further curves and selects one of the further curves which has the smallest connection angle as the connection target curve.

2. The path teaching data creation device (1) according to claim 1, wherein when the connection angles are the same, the selection unit (24) is configured to select one of the further curves as the connection target curve based on a plane identified from a start point of a curve connected to a start point of the connection source curve and the start point and the end point of the connection source curve and on respective start tangent directions of the plurality of further curves.

3. The path teaching data creation device (1) according to any one of claims 1 to 2 further comprising an input unit (16) for a user to designate an initial connection source curve and a start point of the initial connection source curve.

4. The path teaching data creation device (1) according to any one of claims 1 to 3 further comprising:

   a display control unit (23) configured to display a drive path of the robot based on the path teaching data created by the path creation unit (25); and
   a path change unit (27) configured to change the path teaching data based on a correction instruction when the correction instruction is input in response to a drive path of the robot (3) being corrected by a user.

5. A path teaching data creation method for creating path teaching data required for drive control of a robot by using design data including information on a plurality of curves, the path teaching data creation method comprising, at a computer:

   determining whether or not a plurality of further curves connected to an end point of a connection source curve that is a curve from which a connection is started are present;
   when the plurality of further curves are not present, selecting a further curve as a connection target curve;
   when the plurality of further curves are present, calculating connection angles that are angles formed between the final tangent direction of the connection source curve and respective start tangent directions of the plurality of further curves, and selecting one of the further curves which has the smallest connection angle as the connection target curve based on a final tangent direction of the connection source curve and respective start tangent directions of the plurality of further curves;
   determining the selected further curve as a next connection source curve; and
   creating the path teaching data based on a plurality of selected further curves.

6. A program configured to cause a computer to function as the path teaching data creation device according to any one of claims 1 to 4.

## Patentansprüche

1. Vorrichtung (1) zur Erstellung von zur Antriebssteuerung eines Roboters (3) benötigten Bahnlehrdaten durch die Verwendung von Konstruktionsdaten, die Informationen über eine Vielzahl von Kurven enthalten, wobei die Vorrichtung (1) zur Erstellung von Bahnlehrdaten umfasst:

   eine Auswahleinheit (24), die dazu ausgebildet ist, als Verbindungszielkurve zumindest eine weitere Kurve auszuwählen, die mit einem Endpunkt einer Verbindungsquellkurve verbunden ist, die eine Kurve ist, von der ausgehend die Verbindung beginnt, und die ferner dazu ausgebildet ist, die ausgewählte Kurve als nächste Verbindungsquellkurve auszuwählen und sequenziell eine Kurve zu wählen, die die Verbindungszielkurve sein soll; und
   eine Bahnerstellungseinheit (25), die dazu ausgebildet ist, die Bahnlehrdaten auf der Grundlage der von der Auswahleinheit (24) ausgewählten Vielzahl von Kurven zu erstellen,
   wobei die Auswahleinheit (24) dazu ausgebildet ist, bei Vorliegen einer Vielzahl weiterer Kurven, die mit dem Endpunkt der Verbindungsquellkurve verbunden sind, eine der weiteren Kurven als Verbindungszielkurve auszuwählen, basierend auf einer Endtangentenrichtung der Verbindungsquellkurve und jeweiligen Starttangentenrichtungen der Vielzahl weiterer Kurven,

   und wobei die Auswahleinheit (24), wenn die Vielzahl weiterer Kurven, die mit dem Endpunkt der Verbindungsquellkurve verbunden sind, vorliegt, Verbindungswinkel berechnet, welche Winkel sind, die zwischen der Endtangentenrichtung der Verbindungsquellekurve und jeweiligen Starttangentenrichtungen der Vielzahl weiterer Kurven gebildet werden, und eine der weiteren Kurven, die den kleinsten Verbindungswinkel aufweist, als Verbindungszielkurve auswählt.

2. Vorrichtung (1) zur Erstellung von Bahnlehrdaten nach Anspruch 1, wobei die Auswahleinheit (24) so konfiguriert ist, dass sie, wenn die Verbindungswinkel gleich sind, eine der weiteren Kurven als Verbindungszielkurve auswählt, basierend auf einer Ebene, die von einem Startpunkt einer Kurve, die mit einem Startpunkt der Verbindungsquellkurve verbunden ist, und dem Startpunkt und dem Endpunkt der Verbindungsquellkurve festgelegt wird, und auf jeweiligen Starttangentenrichtungen der Vielzahl weiterer Kurven.

3. Vorrichtung (1) zur Erstellung von Bahnlehrdaten nach einem der Ansprüche 1 bis 2, ferner umfassend eine Eingabeeinheit (16), mit der ein Benutzer eine anfängliche Verbindungsquellkurve und einen Startpunkt der anfänglichen Verbindungsquellkurve bestimmen kann.

4. Vorrichtung (1) zur Erstellung von Bahnlehrdaten nach einem der Ansprüche 1 bis 3, ferner umfassend:

   eine Anzeigesteuereinheit (23), die dazu eingerichtet eine Roboterfahrbahn auf der Grundlage der von der Bahnerstellungseinheit (25) erstellten Bahnlehrdaten anzuzeigen; und
   eine Bahnänderungseinheit (27), die dazu eingerichtet ist, die Bahnlehrdaten auf der Grundlage einer Korrekturanweisung zu ändern, wenn die Korrekturanweisung als Reaktion auf eine Korrektur einer Fahrbahn des Roboters (3) durch einen Benutzer eingegeben wird.

5. Verfahren zum Erstellen von Bahnlehrdaten, die für die Antriebssteuerung eines Roboters erforderlich sind, unter Verwendung von Konstruktionsdaten, die Informationen über eine Vielzahl von Kurven enthalten, wobei das Verfahren zum Erstellen von Bahnlehrdaten an einem Computer umfasst:

   Bestimmen, ob eine Vielzahl weiterer Kurven, die mit einem Endpunkt einer Verbindungsquellkurve verbunden sind, die eine Kurve ist, von der aus eine Verbindung gestartet wird, vorhanden ist oder nicht;
   wenn die Vielzahl weiterer Kurven nicht vorhanden ist, Auswählen einer weiteren Kurve als eine Verbindungszielkurve;
   wenn die Vielzahl weiterer Kurven vorhanden ist, Berechnen von Verbindungswinkeln, die Winkel sind, die zwischen der Endtangentenrichtung der Verbindungsquellkurve und jeweiligen Starttangentenrichtungen der Vielzahl weiterer Kurven gebildet werden, und Auswählen einer der weiteren Kurven, die den kleinsten Verbindungswinkel aufweist, als Verbindungszielkurve, basierend auf einer Endtangentenrichtung der Verbindungsquellkurve und jeweiligen Starttangentenrichtungen der Vielzahl weiterer Kurven;
   Bestimmen der ausgewählten weiteren Kurve als nächste Verbindungsquellkurve; und
   Erstellen der Bahnlehrdaten basierend auf einer Vielzahl von ausgewählten weiteren Kurven.

6. Programm, das dazu eingerichtet ist, einen Computer zur Funktion als Vorrichtung zur Erstellung von Bahnlehrdaten nach einem der Ansprüche 1 bis 4 zu veranlassen.

## Revendications

1. Dispositif de création de données d'apprentissage de trajet (1) destiné à créer des données d'apprentissage de trajet nécessaires à la commande d'entraînement d'un robot (3) en utilisant des données de conception comprenant des informations sur une pluralité de courbes, le dispositif de création de données d'apprentissage de trajet (1) comprenant:

   une unité de sélection (24) configurée pour sélectionner, en tant que courbe cible de connexion, au moins une autre courbe connectée à un point d'extrémité d'une courbe source de connexion qui est une courbe à partir de laquelle une connexion est lancée, déterminer l'autre courbe sélectionnée en tant que courbe source de connexion suivante, et sélectionner séquentiellement une courbe qui sera la courbe cible de connexion; et
   une unité de création de trajet (25) configurée pour créer les données d'apprentissage de trajet sur la base de la pluralité de courbes sélectionnées par l'unité de sélection (24),
   dans lequel, lorsqu'il existe une pluralité de courbes supplémentaires connectées au point d'extrémité de la courbe source de connexion, l'unité de sélection (24) est configurée pour sélectionner l'une des courbes supplémentaires comme courbe cible de connexion sur la base d'une direction tangente finale de la courbe source de connexion et des directions tangentes de départ respectives de la pluralité de courbes supplémentaires, et

   lorsque la pluralité de courbes supplémentaires connectées au point d'extrémité de la courbe source de connexion est présente, l'unité de sélection (24) calcule les angles de connexion qui sont les angles formés entre la direction tangentielle finale de la courbe source de connexion et les directions tangentielles de départ respectives de la pluralité de courbes supplémentaires et sélectionne l'une des courbes supplémentaires qui présente l'angle de connexion le plus petit comme courbe cible de connexion.

2. Dispositif de création de données d'apprentissage de trajet (1) selon la revendication 1, dans lequel, lorsque les angles de connexion sont identiques, l'unité de sélection (24) est configurée pour sélectionner l'une des autres courbes comme courbe cible de connexion sur la base d'un plan identifié à partir d'un point de départ d'une courbe connectée à un point de départ de la courbe source de connexion et du point de départ et du point d'arrivée de la courbe source de connexion et sur les directions tangentes de départ respectives de la pluralité d'autres courbes.

3. Dispositif de création de données d'apprentissage de trajet (1) selon l'une quelconque des revendications 1 à 2, comprenant en outre une unité d'entrée (16) permettant à un utilisateur de désigner une courbe source de connexion initiale et un point de départ de la courbe source de connexion initiale.

4. Dispositif de création de données d'apprentissage de trajet (1) selon l'une quelconque des revendications 1 à 3, comprenant en outre:

   une unité de commande d'affichage (23) configurée pour afficher un trajet d'entraînement du robot sur la base des données d'apprentissage de trajet créées par l'unité de création de trajet (25); et
   une unité de modification de trajet (27) configurée pour modifier les données d'apprentissage de trajet sur la base d'une instruction de correction lorsque l'instruction de correction est entrée en réponse à une trajet d'entraînement du robot (3) corrigée par un utilisateur.

5. Procédé de création de données d'apprentissage de trajet pour créer des données d'apprentissage de trajet nécessaires à la commande d'entraînement d'un robot en utilisant des données de conception comprenant des informations sur une pluralité de courbes, le procédé de création de données d'apprentissage de trajet comprenant, sur un ordinateur:

   déterminer si une pluralité de courbes supplémentaires connectées à un point d'extrémité d'une courbe source de connexion qui est une courbe à partir de laquelle une connexion est commencée sont présentes;
   lorsque la pluralité de courbes supplémentaires n'est pas présente, sélectionner une courbe supplémentaire comme courbe cible de connexion;
   lorsque la pluralité de courbes supplémentaires est présente, calculer des angles de connexion qui sont des angles formés entre la direction tangente finale de la courbe source de connexion et les directions tangentes de départ respectives de la pluralité de courbes supplémentaires, et sélectionner l'une des courbes supplémentaires qui présente l'angle de connexion le plus petit comme courbe cible de connexion sur la base d'une direction tangente finale de la courbe source de connexion et des directions tangentes de départ respectives de la pluralité de courbes supplémentaires;
déterminer la courbe supplémentaire sélectionnée comme courbe source de connexion suivante; et
créer les données d'apprentissage de trajet sur la base d'une pluralité de courbes supplémentaires sélectionnées.

**6.** Programme configuré pour faire fonctionner un ordinateur comme dispositif de création de données d'apprentissage de trajectoire selon l'une quelconque des revendications 1 à 4.

FIG. 1

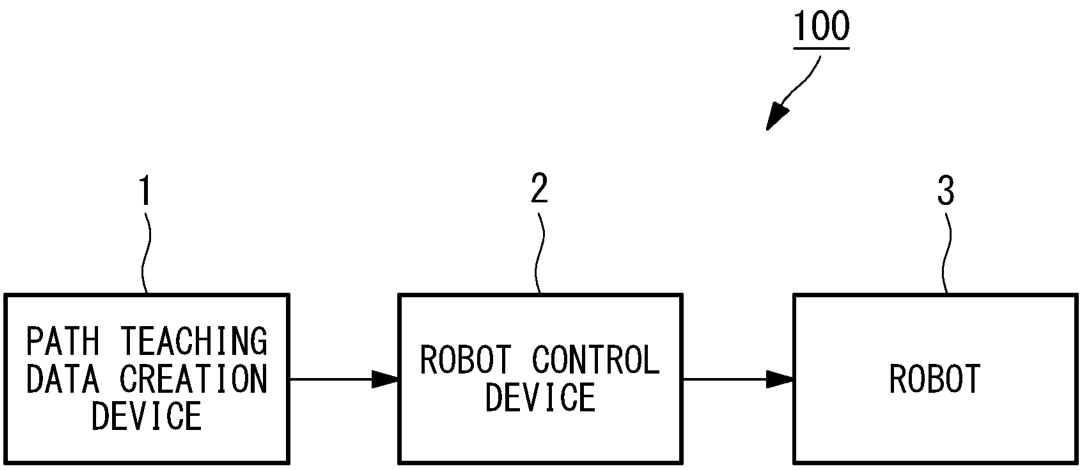
100
1
2
3
PATH TEACHING DATA CREATION DEVICE
ROBOT CONTROL DEVICE
ROBOT

FIG. 2

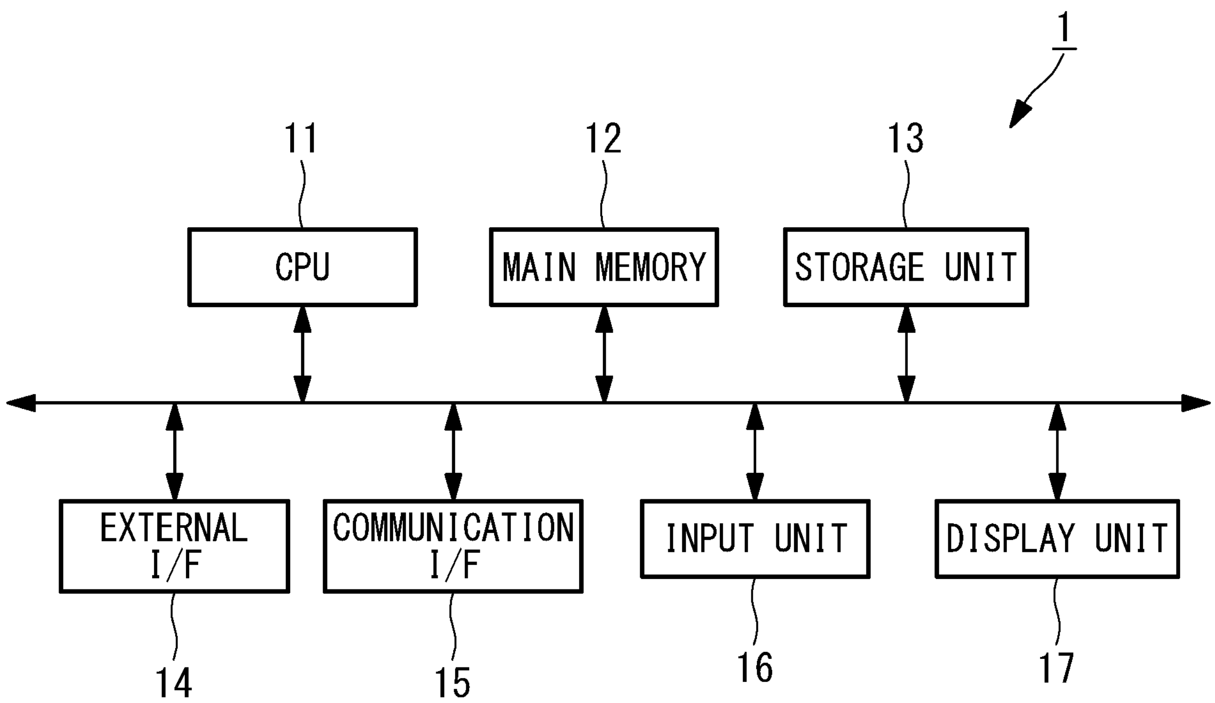
1
11
12
13
CPU
MAIN MEMORY
STORAGE UNIT
EXTERNAL I/F
COMMUNICATION I/F
INPUT UNIT
DISPLAY UNIT
14
15
16
17

FIG. 3

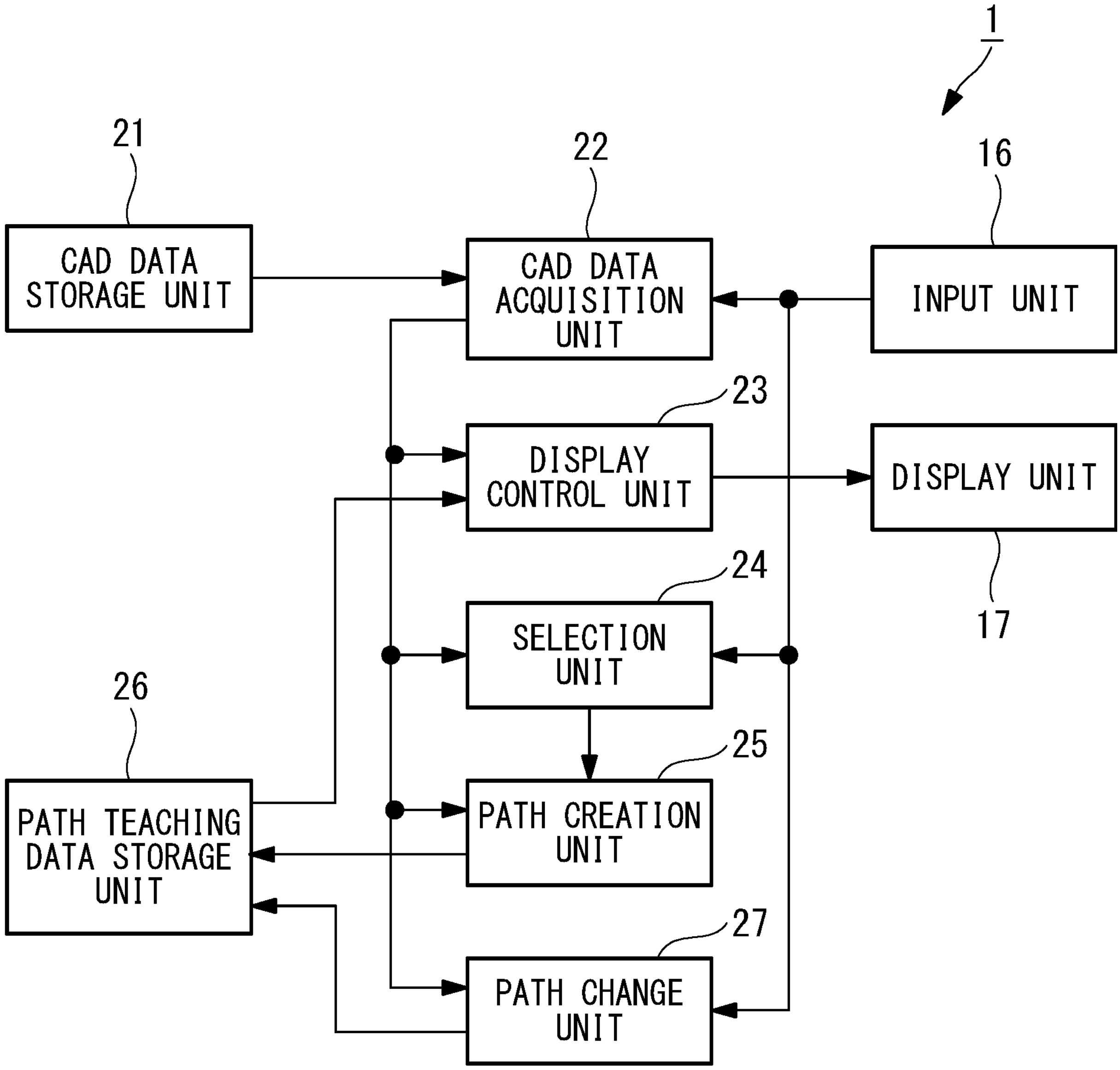
1
21
CAD DATA STORAGE UNIT
22
CAD DATA ACQUISITION UNIT
16
INPUT UNIT
23
DISPLAY CONTROL UNIT
DISPLAY UNIT
17
24
SELECTION UNIT
26
PATH TEACHING DATA STORAGE UNIT
25
PATH CREATION UNIT
27
PATH CHANGE UNIT

FIG. 4

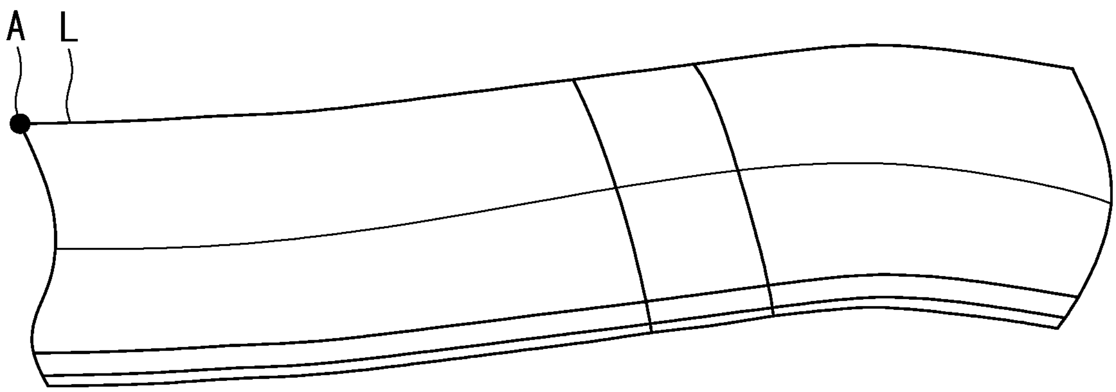

FIG. 5

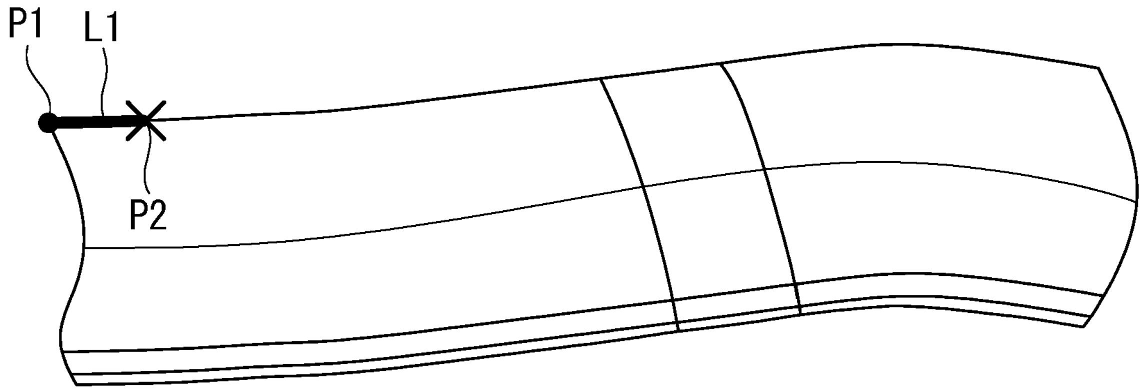

FIG. 6

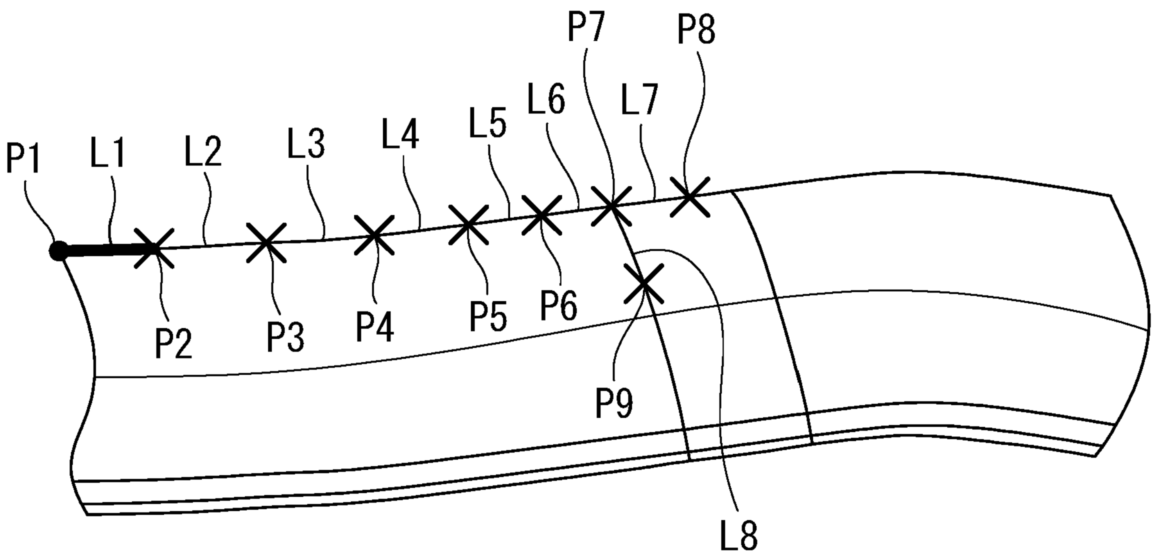

FIG. 7

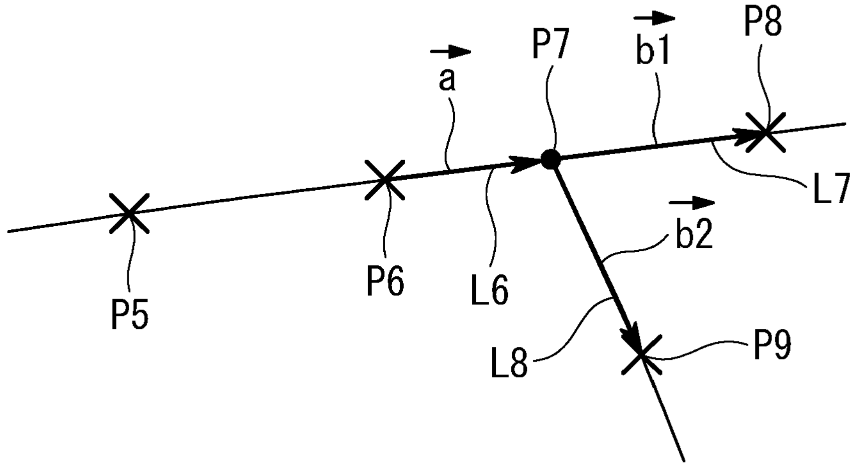

FIG. 8

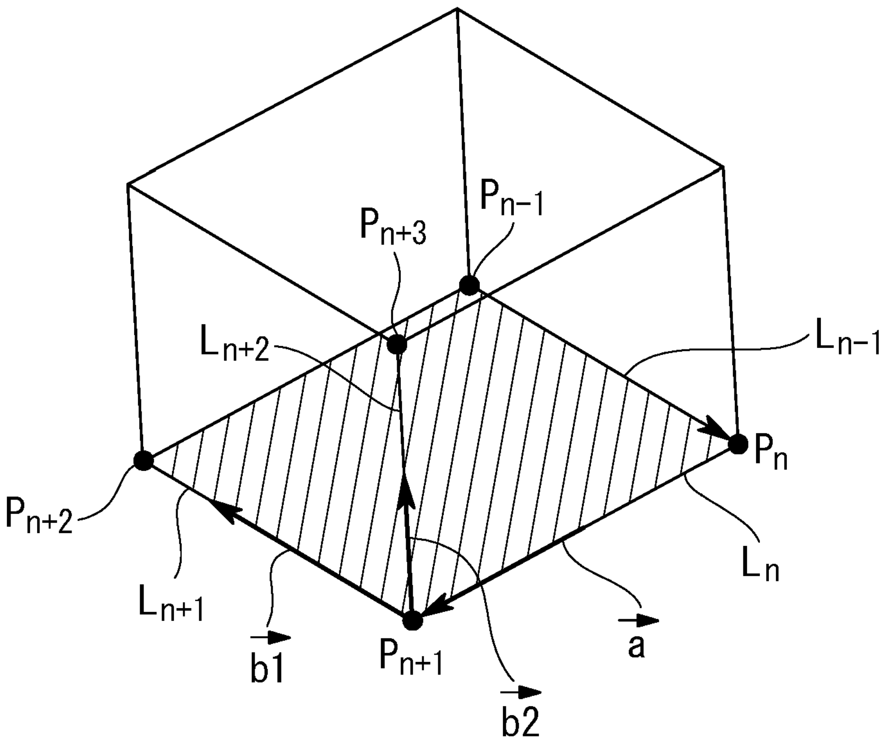

FIG. 9

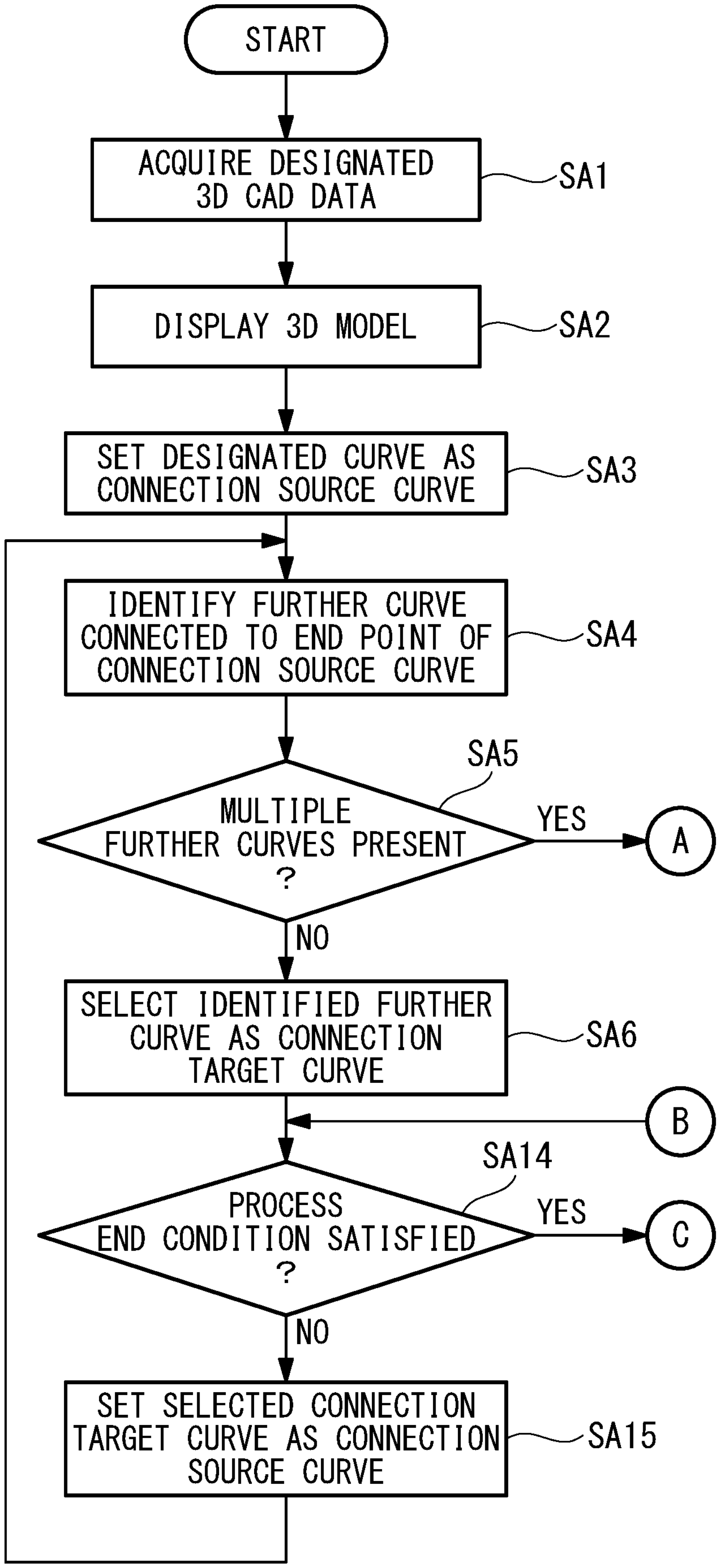
START
ACQUIRE DESIGNATED 3D CAD DATA
SA1
DISPLAY 3D MODEL
SA2
SET DESIGNATED CURVE AS CONNECTION SOURCE CURVE
SA3
IDENTIFY FURTHER CURVE CONNECTED TO END POINT OF CONNECTION SOURCE CURVE
SA4
SA5
MULTIPLE FURTHER CURVES PRESENT ?
YES
A
NO
SELECT IDENTIFIED FURTHER CURVE AS CONNECTION TARGET CURVE
SA6
B
SA14
PROCESS END CONDITION SATISFIED ?
YES
C
NO
SET SELECTED CONNECTION TARGET CURVE AS CONNECTION SOURCE CURVE
SA15

FIG. 10

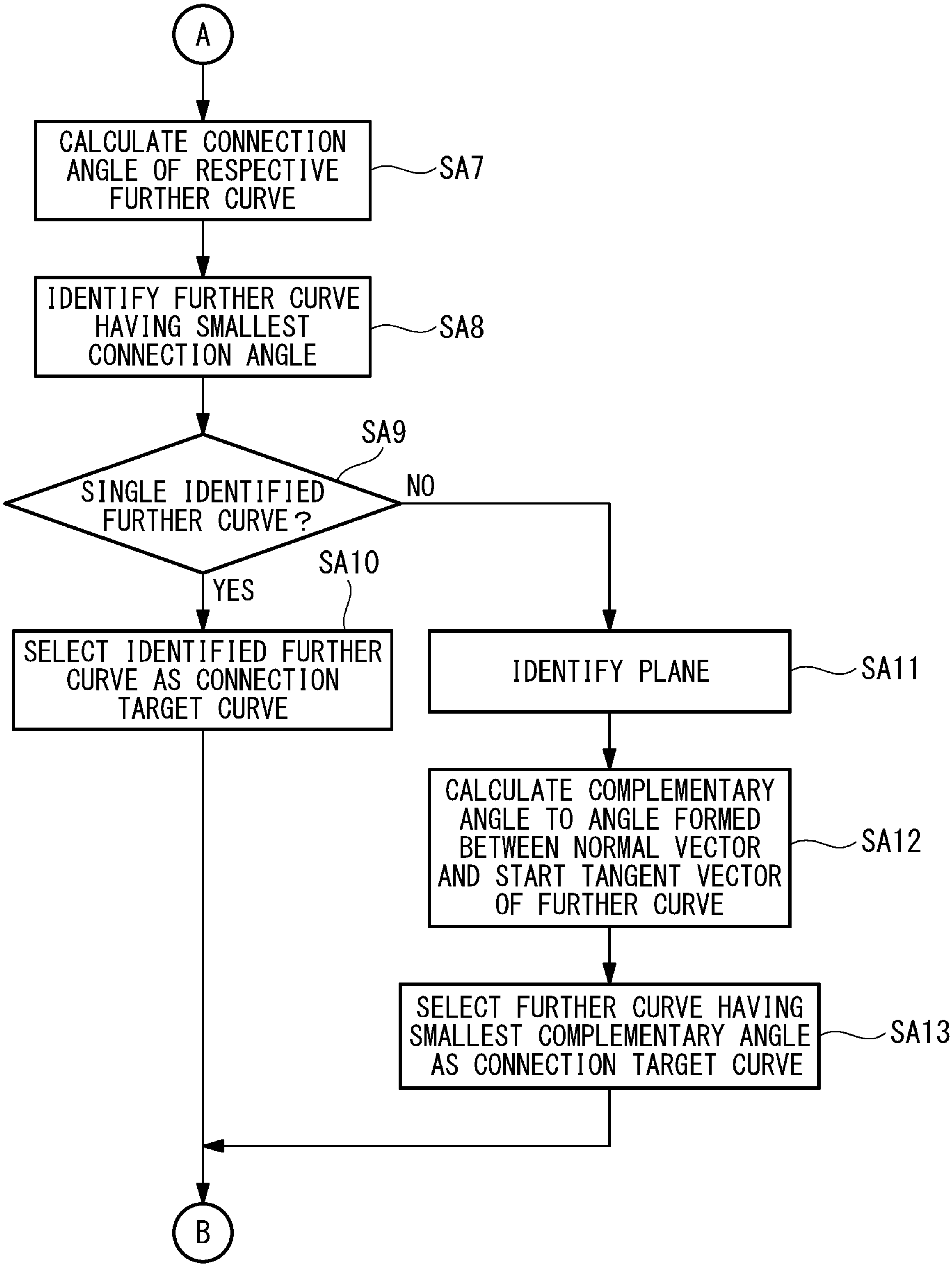
A
CALCULATE CONNECTION ANGLE OF RESPECTIVE FURTHER CURVE
SA7
IDENTIFY FURTHER CURVE HAVING SMALLEST CONNECTION ANGLE
SA8
SA9
SINGLE IDENTIFIED FURTHER CURVE?
NO
YES
SA10
SELECT IDENTIFIED FURTHER CURVE AS CONNECTION TARGET CURVE
IDENTIFY PLANE
SA11
CALCULATE COMPLEMENTARY ANGLE TO ANGLE FORMED BETWEEN NORMAL VECTOR AND START TANGENT VECTOR OF FURTHER CURVE
SA12
SELECT FURTHER CURVE HAVING SMALLEST COMPLEMENTARY ANGLE AS CONNECTION TARGET CURVE
SA13
B

FIG. 11

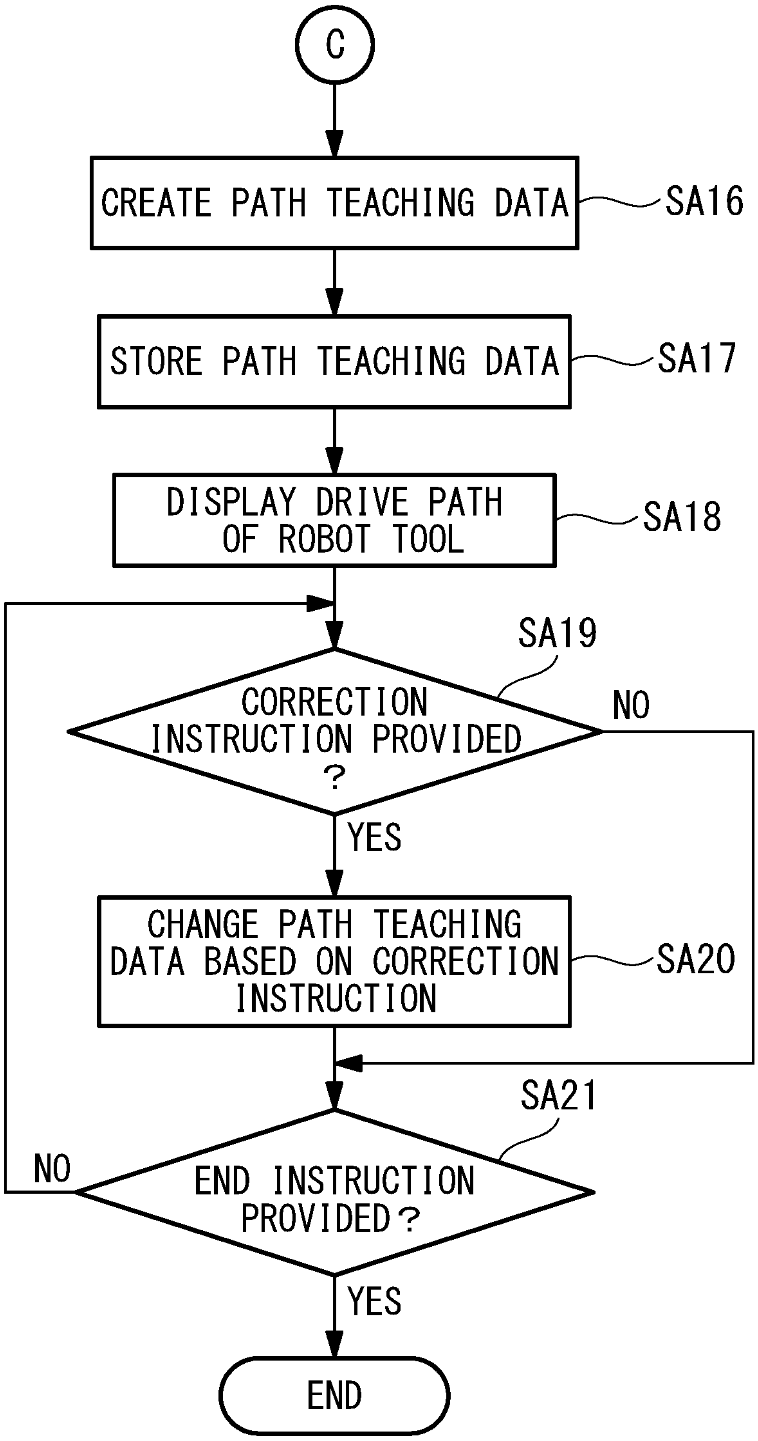
C
CREATE PATH TEACHING DATA
SA16
STORE PATH TEACHING DATA
SA17
DISPLAY DRIVE PATH OF ROBOT TOOL
SA18
SA19
CORRECTION INSTRUCTION PROVIDED ?
NO
YES
CHANGE PATH TEACHING DATA BASED ON CORRECTION INSTRUCTION
SA20
SA21
NO
END INSTRUCTION PROVIDED?
YES
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H09244723 A
- US 2018036883 A1
- JP H07302110 A
- JP 2005332347 A